(19)

**Europäisches Patentamt**
**European Patent Office**
**Office européen des brevets**

(11) **EP 3 196 558 A1**

(12) **EUROPEAN PATENT APPLICATION**

(43) Date of publication:
26.07.2017  Bulletin 2017/30

(51) Int Cl.:
*F24D 19/10* (2006.01)  *G05D 23/19* (2006.01)
*F25B 6/04* (2006.01)  *F25B 40/04* (2006.01)

(21) Application number: 17152853.2

(22) Date of filing: 24.01.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 25.01.2016  US 201615005247

(71) Applicant: Sharp Kabushiki Kaisha
Sakai-shi
Osaka 590-8522 (JP)

(72) Inventors:
• SLACK, Richard
  Oxford, Oxfordshire OX4 4GB (GB)
• TOMLIN, Michael
  Oxford, Oxfordshire OX4 4GB (GB)
• BARRETT, Jacob
  Oxford, Oxfordshire OX4 4GB (GB)
• NONWEILER, John
  Oxford, Oxfordshire OX4 4GB (GB)

(74) Representative: Suckling, Andrew Michael
Marks & Clerk LLP
Fletcher House
Heatley Road
The Oxford Science Park
Oxford OX4 4GE (GB)

(54) **DUAL TEMPERATURE HEAT PUMP SYSTEM**

(57)    A heating system includes a heat pump that provides heat to a major fluid circuit and a minor fluid circuit for performing different heating operations. The system includes a power source having a variable cost and a controller configured to regulate flow of the major and minor fluid circuits to perform the heating operations. The controller is configured to receive information regarding the variable cost of the power source and distribute flow between the major and minor fluid circuits to perform the heating operations to minimize the electricity cost. The combined enhanced demand regulation and enhanced output regulation amplifies the total heat output and power consumption while permitting greater use of a power source of varying cost (e.g. PV) - thereby minimizing overall daily operating cost.

Figure 1

Key to Schematics
- - - - - - Electrical connection
———— Fluid connection

EP 3 196 558 A1

**Description**

**TECHNICAL FIELD**

This invention relates to electrical heat pump systems where the heat pump has an independently-cooled desuperheater, which permits supply of two different simultaneous outlet temperatures, and the system has a source of electricity with variable costs.

**BACKGROUND ART**

Heat pumps are known to be an efficient means of supplying heat for space heating and hot water supply applications, comparing favourably against the primary energy requirements of fossil fuel or biomass boilers. Improved efficiency is considered desirable to consumers as it can deliver lower operating costs. With respect to all HVAC (Heating, Ventilation and Air-Conditioning) systems, it is well-accepted that costs can also be lowered by reducing the amount of heat that must be added or removed from a building. However reducing heating or cooling demands can leave occupants thermally uncomfortable, so the user of an HVAC system will generally target a compromise between thermal comfort and cost.

For heat pump systems, the daily cost of heat is an integral function of the heat pump performance, which is strongly correlated to the difference between the source and load temperatures, and the marginal cost of electricity throughout the day. As such, electrically-powered heat pumps can benefit from variations in the cost of electricity and the source temperature. The marginal cost of electricity supply from renewable energy and other baseload generators such as solar PV (photovoltaics), wind turbines and nuclear reactors can be very low or even negative at times of peak electrical output or minimum grid demand, especially if such devices are in close proximity to energy demands. The regulation of a heat pump to maximise operation during periods of low marginal heat generation cost has great potential to reduce the overall cost of meeting heating demands.

However, the heat demands and the marginal cost of operation can vary dramatically with user behaviour and local weather conditions, both of which can be difficult to predict. Several inventions have been proposed which attempt to increase the predictability and flexibility of a heating system to assist a cost-optimising strategy.

In terms of predictability, the use of past and forecast temperature, consumption and generation data is covered in the prior art, e.g. US8972073B2 (Hayashida, issued March 3, 2015), in the context of control of a conventional heat pump with optional secondary heaters.

In terms of flexibility, the use of a variable speed compressor to modulate heat output in correlation with demand is presented in US5081846A (Dudley et al., issued January 21, 1992). The idea to modulate compressor speed to minimise the net cost of electricity with an operation planning method is described in US8972073B2 (Hayashida, issued March 3, 2015) where a heat pump is combined with a PV device with low-cost electricity, defined as 'reverse power', calculated by subtracting the amount of power to be consumed from the amount of power to be generated.

However there exist other limits to the ability of a heat pump to concentrate operation during periods of low electricity cost and high performance - principally the heat storage capacity of the building and the size of heat emitters. It is well known that many users have difficulty programming heating and cooling thermostats because existing interfaces are not intuitive and are complicated to use. US2004/0262410A1 (Hull, published December 30, 2004) describes one example of a user interface which permits a user to graphically control heating and cooling start/stop times. US2006/0192021 A1 (Schultz et al., published August 31, 2006) describes a thermostat with different schedules and set-points for heating and cooling where an appropriate schedule is automatically selected.

US2011/0257795A1 (Narayanamurthy et al., published October 20, 2011) describes the use of a comfort band where, in heating mode, the maximum comfortable temperature is a set-point for initiating a solar energy system to deliver a flow of fresh air and the minimum comfortable temperature is a set-point for a thermostat device in an HVAC system and vice versa in cooling mode.

US2014/0358291 A1 (Wells, published December 4, 2014) describes an HVAC control system designed to achieve and/or maintain an environmental condition within a building at a level at which the user is expected to be comfortable.

GB2508238A (Ruff, published May 28, 2014) describes a control means whereby the heating and cooling characteristics of a building are monitored, enabling the heating means to be deactivated before the occupant leaves the building to save energy.

US2014/0316584A1 (Matsuoka et al., published October 23, 2014) describes a technique for reducing the amount of energy consumed by an HVAC system by performing either temperature-wise or time-wise microchanges to a schedule of temperature set-points.

US2014/0277761 A1 (Matsuoka et al., published September 18, 2014) describes a method of controlling an HVAC system with a control trajectory, which is optimal in that it minimizes a cost function comprising a combination of a first factor representative of a total energy consumption during a DR event (Demand-Response) period, a second factor representative of a metric of occupant discomfort, and a third factor representative of deviations of a rate of energy consumption over the DR event period.

Conflicts arise when multiple loads with contrasting requirements must be met, and whose relative demands vary greatly due to unpredictable actions, e.g. a user taking a hot bath at an unexpected time. Such conflicts are difficult to manage with conventional 'single temperature' heat pumps which can only supply heat at one temperature at any given time. The most efficient strategy is generally to alternate between loads to optimise the water temperature supplied to each load. However, such an alternating strategy requires the major circuit, e.g. space heating, to be closed for several hours whilst the minor circuit, e.g. hot water storage, is heated. Any reduction in the available space heating hours each day increases the average temperature of the heat emitters, such as convector-radiators, in order to emit the same amount of daily heat; higher outlet temperatures result in lower heat pump performance which increases daily cost. Uncertainty in the requirements of the minor circuit, or the rate at which it can be heated, leads to further 'off' periods in the major circuit and thus even higher average temperatures and daily cost. Frequent switching between heat loads causes substantial inefficiency due to thermal mass within systems; however, long delays between switching can cause temperatures to drift out of comfortable ranges or require inefficient means to restore them to comfortable conditions.

'Dual temperature heat pumps', such as EP0134015B1 (Yasuda et al., published March 13, 1985) enable the minor load to be supplied at the same time as the major load, but at a higher temperature, owing to the use of a separate heating circuit within the heat pump. Specifically, the minor circuit comprises a first heat exchanger following the compressor, termed the 'desuperheater', whilst the major circuit comprises a second heat exchanger termed the 'condenser'. In the prior art, this concept is used to improve performance by delivering water temperatures above the condensing temperature of the refrigerant.

## SUMMARY OF INVENTION

The present invention comprises a heat source, a heat pump with two heat output circuits, heat storage, a source of power with variable cost, and a system controller. The system controller controls the heat pump and regulates the flow in the source, and two load circuits.

In the prior art, heating costs are minimised using variable load regulation, where the means of varying the heat load or heat output of heat pump systems are limited to variable speed compressors and separate heating devices. The potential to organise heat generation to minimise cost over daily or longer periods is thus very limited in scope. Integration of variable load regulation together with algorithms that attempt to minimise temperature differences, or apportion heat output to periods of lower electricity cost, is complex because the marginal heat cost increases with higher heat output. This generates conflicting interests, particularly where electricity cost is variable and unpredictable.

In the prior art, the dual temperature heat pump concept is used to improve performance by delivering water temperatures above the condensing temperature of the refrigerant.

In the present invention, in addition the dual temperature heat pump concept is used together with heat storage to improve system flexibility. The available range of both the heat demand and heat output of the system are expanded. The expanded ranges serve to increase the controller's flexibility to improve system efficiency and reduce operating costs. For example, heat output can be apportioned to periods of lower electricity cost without the increases in marginal heat cost that would normally be expected.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

## BRIEF DESCRIPTION OF DRAWINGS

**Fig. 1** is a schematic diagram of a heating system incorporating a heat source comprising an array of PV-T collectors and a configuration of major and minor heat load circuits in accordance with a first embodiment of the system.

**Fig. 2** is a schematic diagram of a heating system in accordance with a second embodiment of the system.

**Fig. 3** is a schematic diagram of a heating system in accordance with a third embodiment of the system.

**Fig. 4** is a schematic diagram of a heating system in accordance with a fourth embodiment of the system.

**Fig. 5** is a series of graphs explaining the benefit of heat pump features: variable speed control and dual temperature output, on the ability of a controller to minimise surplus power generation from a solar PV array in order to minimise net daily operating cost.

**Fig. 6** is a flowchart for determining the major circuit schedule or 'plan'.

## DESCRIPTION OF REFERENCE NUMERALS

| 2 | Controller |
|---|---|
| 4 | Heat pump |
| 6 | Expansion valve |
| 8 | Evaporator |
| 10 | Compressor |
| 12 | Desuperheater |
| 14 | Condenser |
| 15 | Discharge temperature sensor |
| 16 | PV-T collector array |
| 18 | Source fluid circulation pump |
| 20 | Source circuit return temperature sensor |
| 22 | Major load circuit pump |
| 24 | Major load circuit flow temperature sensor |
| 26 | Major load circuit return temperature sensor |
| 28 | Major load circuit booster heater |
| 30 | Major load circuit heat emitters |
| 32 | Minor load circuit pump |
| 34 | Minor load circuit flow temperature sensor |
| 36 | Minor load circuit return temperature sensor |
| 38 | Hot water tank |
| 40 | Pre-heating thermal store |
| 42 | Cold sanitary water supply |
| 44 | Immersion heater |
| 46 | Hot water tank top temperature sensor |
| 47 | Hot water tank upper-mid temperature sensor |
| 48 | Hot water tank lower-mid temperature sensor |
| 49 | Hot water tank bottom temperature sensor |
| 50 | DC-AC Inverter for solar PV system |
| 52 | Electric generation power output sensor |
| 54 | User interface |
| 56 | Indoor or 'house' air temperature sensor |
| 58 | Outdoor air temperature sensor |
| 60 | Finned-coil evaporator |
| 62 | Electric fan |
| 64 | 4-way reversing valve |
| 66 | Solar photovoltaic (PV) modules |
| 68 | Camera(s) |
| 70 | Secondary indoor air temperature sensor |
| 72 | Ground source heat exchange loop |
| 74 | Wind turbine generator |
| 76 | Internet server |
| 78 | Heat storage vessel containing phase change material |

80    Smart meter
82    Minor circuit heat exchanger with spa circuit
84    Open heated water vessel, e.g. spa
86    Spa fluid circulation pump
88    Spa return temperature sensor

## DETAILED DESCRIPTION OF INVENTION

First Embodiment

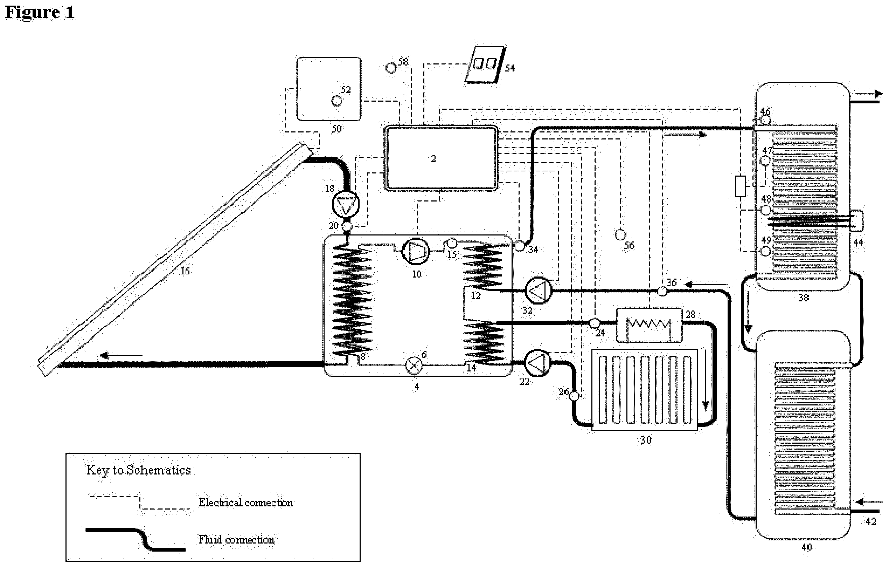

In exemplary embodiments of the present, Figure 1, a system controller 2 (herein termed "the controller") regulates a heat pump 4 which comprises a vapour-compression cycle for transferring heat from a heat source to a heat load.

In general, an aspect of the invention is a heating system for performing heating operations (and potentially also cooling operations) of a heated space. In exemplary embodiments, the heating system includes a heat pump and two heat output circuits in fluid communication with the heat pump for the flow of the refrigerant, the two heat output circuits comprising a major fluid circuit and a minor fluid circuit for performing different heating operations. The system further includes a power source having a variable cost. A controller is configured to control the heat pump and regulate flow of the major and minor fluid circuits to perform the heating operations. The controller is configured to determine a variable cost of electricity of the power source, and distribute flow as between the major and minor fluid circuits to perform the heating operations to minimize the electricity cost. The combination of enhanced heat demand regulation with enhanced heat output regulation enables the total heat output and power consumption to be amplified. This enhanced regulation of a heated space permits greater use of a power source of varying cost (e.g. PV) - thereby minimizing overall daily operating cost.

The refrigeration circuit shown in Figure 1 follows a 'dual temperature' heat pump design. At the start of the cycle a refrigerant is expanded by an electronically-controlled expansion valve 6 to drop its evaporating temperature to below the source fluid return temperature such that it can absorb heat from a source fluid by evaporating said refrigerant in an evaporator 8. The refrigerant vapour is subsequently compressed by a compressor 10 with an inverter-driven electric motor, and through a desuperheater 12 that is cooled in contraflow heat exchange by a minor fluid circuit, and then subsequently passed through a condenser 14 that is cooled by a major circuit before re-entering the expansion valve 6. The evaporator, desuperheater and condenser are preferably microchannel brazed plate heat exchangers which offer a very large heat transfer surface area relative to the pressure loss imposed on either the refrigerant, source or load fluid circuits.

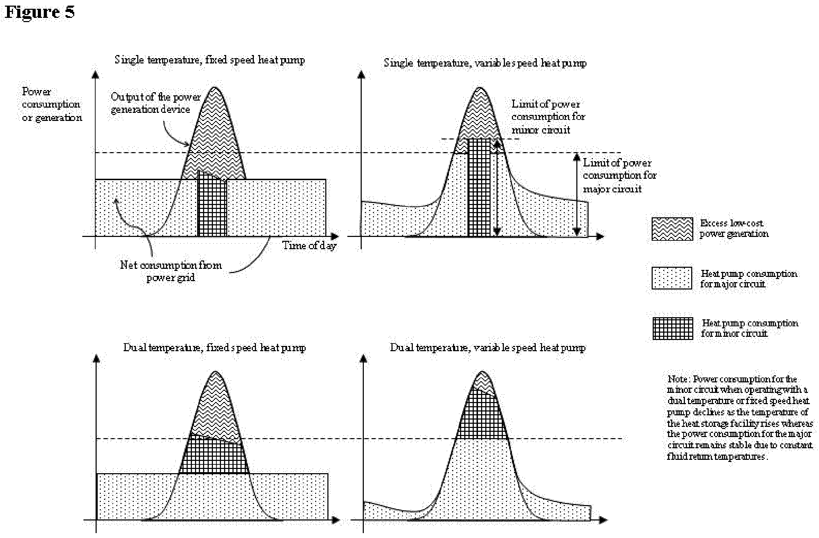

The ability of the dual temperature heat pump to heat two circuits simultaneously enables the system to use the combined heat emitting capacity of the two load circuits. Figure 5 illustrates the differences in the theoretical potential of single and dual temperature heat pumps with fixed and variable speed compressor control assuming perfect heat demand prediction and regulation. With or without variable speed control, the combination of perfect heat demand regulation and dual temperature design reduces the net consumption of electricity from the grid by increasing the fraction of daily consumption that can be supplied by a local power generation device, in this case a solar PV array.

Referring back to Figure 1, a discharge temperature sensor 15 is attached to the refrigerant discharge pipe between the compressor and desuperheater 12. The discharge sensor is used by the controller to prevent excessive compressor temperatures, which may vaporize lubricants and also to prevent the fluid in the minor circuit from boiling inside the desuperheater at the specified circuit pressure.

The source fluid circuit for providing a source flow of coolant to the evaporator comprises one or more hybrid PV-T (photovoltaic-thermal) collectors 16, a source fluid circulation pump 18, and a source circuit return temperature sensor 20 measuring the source fluid entering the evaporator 8. The PV-T collector array 16 includes of one of more heat exchangers attached to the shaded side of solar photovoltaic collectors. The PV-T collectors 16 are preferably installed on a roof-top to minimise local shading and connected together in parallel such that the coolant flow rate through each collector is minimised. Solar heat absorbed to the modules during the day elevates the source fluid above the ambient air temperature. The correlation of power generation and source temperature achieved with PV-T collectors further reduces the net operating cost during periods of high solar irradiance such that the ratio of operating cost between night and day becomes very high, and there is greater potential to reduce daily costs through dynamic heat load and demand control. The source fluid is a specific heat transfer fluid, hereinafter termed a "coolant", which preferably contains a mixture of water, propylene or ethylene glycol and corrosion inhibitors, and has a freezing point below the minimum source temperature at which the system is designed to operate, for example -25°C.

The major load fluid circuit, for performing space heating for a heated space and therefore hereinafter termed the "space heating circuit", comprises a major load circuit pump 22, a major load circuit flow temperature sensor 24, a major load circuit return temperature sensor 26, a major load circuit "booster heater" 28, and one or more major load circuit heat emitters 30. The heat emitters are located within a building for the purpose of space heating. Suitable heat emitters include wall-mounted radiators, underfloor pipes and fan coil units. The booster heater 28 is installed in series with and following the condenser of the heat pump. The booster heater may be controlled to provide a fixed or variable heat output to the major circuit to either supplement or replace the output supplied by the condenser. The booster heater is preferably an electrical resistance element mounted within the fluid circuit of no more than a 6kW rated capacity. The booster heater is regulated to increase space heating output beyond what can be supplied by the heat pump.

The minor circuit comprises a minor load circuit pump 32, a minor load circuit flow temperature sensor 34, a minor load circuit return temperature sensor 36, and a heat exchange coil within a hot water tank 38 containing domestic water. The minor load circuit may perform a secondary heating operation other than space heating, such as for example heating water in a hot water tank,, and is hereinafter termed the "hot water circuit". The outlet of the coil is preferably at the lowest point of the tank where thermally-stratified water will be at the coolest point. The minor circuit additionally includes a pre-heating thermal store 40 arranged in series and subsequent to the hot water tank 38. The store 40 is a cylindrical tank comprising a heat exchange coil which is used to pre-heat a supply of cold sanitary water 42 before it enters the hot water tank 38. Fluid in the minor circuit flows through the body of the store 40. The store enables greater heat storage and greater thermal stratification without increasing the volume of water that must be periodically pasteurised.

The space heating circuit and hot water circuits preferably contain water with corrosion inhibitors. The hot water circuit is commissioned with a static pressure of at least 1.5 bar gauge to ensure that water cannot boil in the desuperheater.

Each of the circulation pumps for the space heating, hot water and coolant circuits preferably comprises a variable speed motor which is regulated by the controller using a low voltage analogue signal.

An "immersion heater" 44, which is preferably an electrical resistance element of no more than a 3kW rated capacity, is mounted at a low height within the hot water tank. Four temperature sensors 46, 47, 48 and 49 are mounted within pockets in the hot water tank at approximate heights relating to 20%, 40%, 60% and 80% of the total tank height respectively. The four temperature sensors specifically may be configured as a hot water tank top temperature sensor 46, a hot water tank upper-mid temperature sensor 47, a hot water tank lower-mid temperature sensor 48, and a hot water tank bottom temperature sensor 49. The controller calculates an approximate hot water storage level based on the mean average of the four sensor values.

The DC (direct current) outputs of the PV-T collectors 16 are connected to a DC-AC inverter 50 for the solar PV system whose AC output is monitored by an electric generation power output sensor 52, such as a current transducer. The current transducer transmits the AC output signal to the heating controller.

As described in detail below, the controller regulates the heat pump to maintain user comfort and meet other system requirements such as pasteurisation and defrosting. The controller uses a variety of sensors to monitor and store the thermal status of the fluid circuits, the heat storage facility, the outdoor environment, and the heated space. Through a user interface, the controller also receives various indications of discomfort from occupiers of the heated space. Over time the controller develops profiles of the maximum and minimum comfortable temperature levels within the heated space and heat storage facilities by modifying an initial profile with said indications of discomfort.

To implement the features of the present invention, the controller may be an electronic or computerized controller that includes one or processor devices that are configured to execute program code embodying the control methods associated with the present invention. It will be apparent to a person having ordinary skill in the art of computer programming of electronic devices how to program the controller to operate and carry out logical functions associated with the present invention. Accordingly, details as to specific programming code have been left out for the sake of brevity. Also, controller functionality could be carried out via dedicated hardware, firmware, software, or any combinations thereof, without departing from the scope of the invention. As will be understood by one of ordinary skill in the art, therefore, the controller may have various implementations. For example, the controller may be configured as any suitable processor device, such as a programmable circuit, integrated circuit, memory and I/O circuits, an application specific integrated circuit, microcontroller, complex programmable logic device, other programmable circuits, or the like. The controller may also include a non-transitory computer readable medium, such as random access memory (RAM), a read-only memory (ROM), an erasable programmable read-only memory (EPROM or Flash memory), or any other suitable medium. Instructions for performing the methods described below may be stored in the non-transitory computer readable medium and executed by the processor device.

The ability of the controller to create optimised heat demand plans which are influenced by indications of discomfort permits the controller to exploit the complete range of user comfort rather than pursuing a pre-determined average comfort set-point in the manner of the prior art solutions. With a broader operating temperature range the system can store more heat in a heated space during periods of low marginal electricity cost and high heat pump performance. Together with the flexibility of simultaneous output, higher storage temperatures and greater COP that are afforded by the dual temperature heat pump, the combined system can develop optimised control strategies that greatly reduce daily operating cost.

Aspects of the invention, therefore, include a system for space heating or cooling a heated space. In exemplary embodiments, the system includes a heat pump including a refrigeration circuit for transferring heat from a heat source to a heat load for a heating operation, (and potentially from the heat load to the heat source for a cooling operation). A controller is configured to control the heat pump to perform the heating and cooling operations. A user interface is configured to receive user inputs from a user, wherein the user inputs include an indication of discomfort based on temperature within the heated space. The controller creates a profile for a minimum comfortable temperature level and a maximum comfortable temperature level based on the user inputs. An aspect of the invention is a method of controlling the system in accordance in accordance with the profiles for the minimum and maximum comfortable temperature profiles. The control method may be performed by a configured controller operating as a computer device that executes program code stored on a non-transitory computer readable medium. In accordance with this control method, the controller controls the heat pump to perform the heating and cooling operations.

To optimize performance relative to minimizing electricity costs, the controller is configured to determine electricity cost information, which may be variable. For example, when PV-T collectors as referenced above are used as a heat source, output can vary based on the amount and intensity of light reaching the collectors, such as based on time (e.g., day versus night) and varying weather conditions, which in turn results in a varying electricity cost. Accordingly, the controller is configured to determine variable electricity cost information based on a varying output by the heat source. Another source of electricity cost variability may derive from the electricity providers. It is common now for providers to impose variable electricity costs based on date/time, with peak use periods having a greater cost relative to low use periods. The controller may receive such variable electricity cost information from the provider. In exemplary embodiments, regardless of the basis for cost variation, variable electricity cost information may be determined with aid of a smart meter, which may be integrated as part of the controller or provided as a stand-alone component that transmits the cost information to the controller. In this manner, the controller is configured to determine a variable cost of electricity of the power source, and distribute flow as between the major and minor fluid circuits to perform the heating operations to minimize the electricity cost.

Using the received data, the controller predicts for a period into the future a) the outdoor air temperature profile, b) the passive thermal gains to the heated space, c) the marginal cost of electricity, and d) the user demands from the heat storage facility. With these predictions, together with the comfort profiles and stored values of the thermal properties of the heated space, the controller creates plans which seek to maintain the temperature of the heated space within the comfortable minimum and maximum profiles, and maintain sufficient heat in the heat storage facility to meet user demands with the minimum net operating cost.

The controller continuously uses relative and absolute demand levels calculated by the plans to determine the operating mode that is likely to result in the lowest operating cost. The controller changes between modes by regulating the flow in each of the source, major and minor load circuits.

The controller implements a cost-optimising function exploiting features of the 'dual temperature' heat pump design which have not been previously been recognised, including for example:

A. Maximising the fraction of daily time that can be assigned to heating the major load such that average heat demand and changes of operating mode are minimised (e.g. maintaining continuous space heating at the minimum temperature to maximise heat pump performance).

B. Maximising the fraction of daily heat that can be delivered to the combined loads during short periods within the day. Ordinarily the heat transfer capacity of the heat pump at maximum temperature exceeds the capacity of the heat emitters in the major circuit which constrains the heat output. With the dual temperature design total heat output can be preferentially maximised during periods of low heat generation cost by exploiting the sum of the major and minor loads.

C. Increasing the sensible heat storage capacity and functionality of a given mass of material by taking advantage of the ability of the dual temperature design to heat the fluid in the minor circuit in excess of the safe condensing limit of the refrigerant. Furthermore, this advantage increases under conditions where the heat pump performs least efficiently, thus enabling a planning algorithm to mitigate the performance loss with greater use of storage.

In accordance with such features, in embodiments of the present invention the controller is configured to: predict an outdoor temperature profile based on outdoor temperature information measured by the outdoor temperature sensor; predict passive thermal gains of the heated spaced based on indoor temperature information measured by the indoor temperature sensor; predict a marginal cost of electricity of the system based on the received electricity cost information; predict user demand based on the user inputs to the user interface; generate an optimized heat demand plan in accordance with the predictions, the plan being optimized for maintaining the temperature of the heated space within a comfortable temperature range in accordance with the profiles for the minimum and maximum comfortable temperature levels while minimizing electricity cost; and control the heat pump to perform the heating and cooling operations in accordance with such plan. Similarly to the above, another aspect of the invention is a corresponding a method of generating the optimized heat demand plan, and controlling a heating and cooling system in accordance such plan. The control method may be performed by a configured controller operating as a computer device that executes program code stored on a non-transitory computer readable medium. Details of each of the aspects or steps of the control of the heating and cooling system are as follows.

The controller begins by creating an initial profile of maximum and minimum comfortable temperatures. In exemplary embodiments, profiles for the minimum and maximum comfortable temperature levels respectively may include a minimum temperature level and a maximum temperature level set for specified time intervals. For example, the week may be split into contiguous periods, for example fifteen minute time periods, and then for each time period a maximum and minimum comfortable temperature is defined. The maximum and minimum comfortable temperatures will initially be set to sensible limits which are defined through a settings screen of a user interface 54. The user interface 54 may include typical computer-type interface elements as are known in the art, such as a keypad or keyboard, a display which may include or be a touch screen display, various indicator devices for visual and/or audio indicators, such as LED lights, speakers, or the like, and any other suitable devices as are known to be employed in computer-type user interfaces.

The user interface may be employed by a user to generate settings that define user temperature preferences based on time. The user preferences may be based on various characteristics of the occupants' daily and weekly schedules, and preferences which could allow an initial profile to be defined in a way that is more suited to the occupants' needs. For example, the user-interface could be employed to define whether the house is occupied during the day, at what time the occupants go to bed, at what time the occupants get up and whether the occupants would like the house to be heated more efficiently or to a hotter temperature than the average house. One reason a profile is preferable to a fixed temperature set-point at limited times of the day, is that the most comfortable temperature will depend on occupancy and activity levels, so a comfortable temperature in the morning may not be comfortable in the evening.

Once the initial maximum and minimum comfortable temperature profiles are set up, the occupants simply need to indicate discomfort at other times. For example, users may provide via the user interface an indication of a current discomfort based on temperature, such as by pressing an "It's too hot!" or an "It's too cold!" button on the user-interface 54. By indicating a current discomfort via the user interface, in response to the user inputs the controller will change the current system heating strategy to instantly relieve the occupant's discomfort, and will also modify the comfortable temperature profiles for this time period of the week and closely related time periods of the week. For example, if the time periods are 15 minutes long, the 15 minute time period after the current one may likely also need to be modified slightly. Similarly, uncomfortable temperatures on a Tuesday morning are also likely to be uncomfortable on a Wednesday morning, so the corresponding Wednesday morning 15 minute time period could also be changed.

To avoid the potential problem of a single time period having been declared both too hot and too cold, a minimum temperature difference (for example 2°C) may be used. For example, if it is 16°C in the house and the occupier presses the "It's too cold!" button, the minimum comfortable temperature should be set to a value above 16°C; 17°C is a reasonable value. Now if the maximum comfortable temperature is currently defined at 18°C, the maximum comfortable temperature for the current time period should be increased to 19°C to maintain the minimum 2°C difference.

Also, there is likely to be some variation of comfortable temperature throughout the year, so to minimise the number of occurrences of occupier discomfort, it is beneficial for the minimum and maximum comfortable temperature profiles to gradually regress back to the original baselines for these profiles. For example, every day the minimum comfortable temperature baseline could be re-calculated as 0.99 * minimum comfortable temperature + 0.01 * baseline minimum comfortable temperature.

In exemplary embodiments, the controller monitors two further sensors, termed the indoor or house air temperature sensor 56 and the outdoor temperature sensor and 58. On a regular basis, possibly several times a minute for example, the controller will receive, as a minimum, the current indoor (hereinafter referred to as "house") and outdoor temperature sensor readings measured by the sensors. If the house temperature has drifted away from the value expected by the current heating plans by a threshold level or there is no plan, then a new plan will be created. For example, if the threshold is 0.25°C and the current house temperature is more than 0.25°C away from the value expected at this time in the current plan, a new plan will be required.

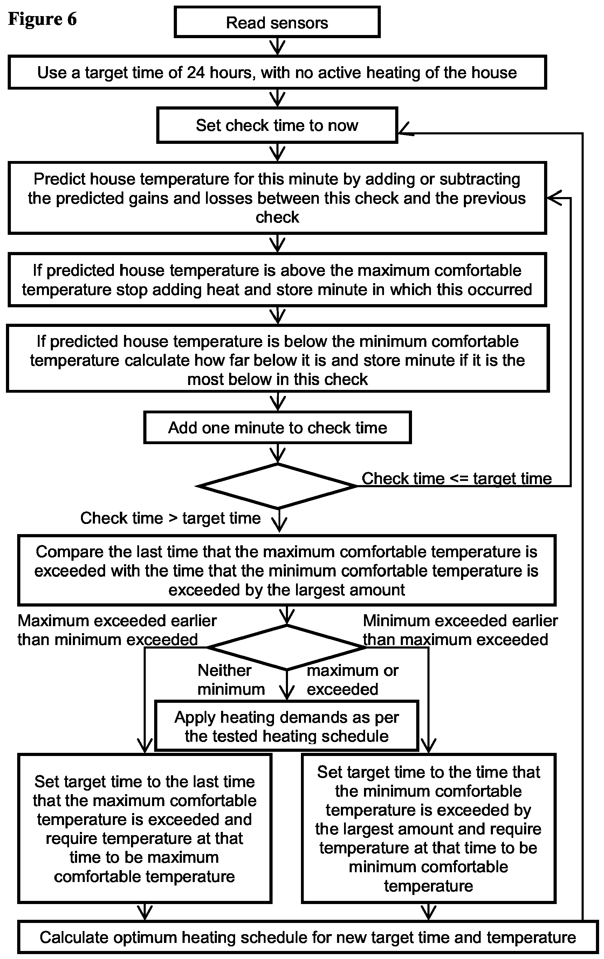

Using the measurements from the house temperature sensor 56 and the outdoor temperature sensor 58, the controller will develop a plan for the next period of time. An example method of creating a heating plan is shown in Figure 6 and is described below. Although the exemplary method is described below as a specific order of executing functional logic steps, the order of executing the steps may be changed relative to the order described. Also, two or more steps described in succession may be executed concurrently or with partial concurrence. It is understood that all such variations are within the scope of the present invention.

In exemplary embodiments of the method of creating a heating plan, the controller starts by predicting the house temperature for every minute in the next 24 hours without adding heat via the heating system. The house temperature will vary due to house heat loss to outdoors, passive solar gain, occupancy gain, and gains due to appliance and lighting use. These gains and losses can be estimated using historical data or can be based on generally expected values for these figures.

Next, for every minute in the next 24 hours, the predicted house temperature is compared with the minimum and maximum comfortable temperatures. The times at which two events occur are stored:

i) The time at which the house temperature is most below the minimum comfortable temperature.

ii) The last time for which the maximum comfortable temperature is exceeded.

If neither of these events occurs, no heat is needed for the next 24 hours. If only one event occurs, this time is set as the next target time. If both events occur, the soonest of these two events is set as the next target time.

The optimum heating schedule is then determined in order to have a suitable house temperature at the next target time. The suitable house temperature will be between the minimum and maximum comfortable house temperatures.

The predicted house temperature for every minute between now and the target time when using the optimum heating schedule is now compared with the minimum and maximum comfortable temperatures at that time. If the temperature goes above the maximum, no more heat is added in subsequent minutes. Again, the times at which two events occur are stored:

i) The time at which the house temperature is most below the minimum comfortable temperature.

ii) The last time for which the maximum comfortable temperature is exceeded.

If neither of these events occurs, the heating schedule will be used. If only one event occurs, this time is set as the next target time. If both events occur, the soonest of these two events is set as the next target time. To avoid excessive compressor restarts, if this target time is less than 15 minutes away, the target time will be set to 15 minutes and the optimum heating schedule for the 15 minutes target time will be used. Otherwise, the process repeats with the new target time until a suitable heating schedule is identified.

The optimum heating schedule is simply a list of space heating demands in Watts for every minute until the target time. These demands are met by controlling the hardware (for example, the speed of a compressor and space heating, hot water and coolant pumps). When the optimum heating schedule is determined, the predicted house temperatures for every minute will also be calculated. These predicted house temperatures can then be used to determine whether a new plan is required when temperatures are read again.

With most heating systems, it is more efficient to maximise the operating time of the space heating circuit as this reduces the average temperature required by the heat emitters (such as radiators) to deliver a specific amount of heat to a building. With heat pumps, lower emitter temperatures relate to lower condensing temperatures which greatly improves COP. Additionally, longer operating times reduce the problems of short-cycling, which otherwise can lead to excessive wear on the compressor motor and power electronics, and inefficiencies due to poor COP during start-up conditions.

To calculate the optimum heating schedule, the controller first calculates the average heat demand as follows:

$$Q_{avg} = \Delta T_h * M_h / (1 + KPM * (1 - KPM^{M-1}) / (1 + KPM))$$

where $Q_{avg}$ is the average demand in W for each minute to meet the target in M minutes,

$\Delta T_h$ is difference between the target temperature and the unheated house temperature, in K,

$M_h$ is the thermal mass of the house in W.minutes/K,

$M$ is the number of minutes from now until the target time,

$KPM$ is the temperature kept per minute in K/Kmins, *and KPM = 1 - (UA / $M_h$)*

where $UA$ is the loss factor of the house in W/K.

If the average demand exceeds a maximum preferred demand per minute threshold value, the average demand will be used for all minutes between now and the target time. Otherwise, the demand will be unevenly met between now and the target time. It is preferable to run during some periods of the day rather than others, so a preference factor is used for every minute between now and the target time. A single demand factor can be calculated as,

$$DF = Q_{tot} / \Sigma_{now}^{target} (PF * KTT),$$

where DF is the demand factor,

$Q_{tot}$ is the total demand if all of the demand was met in the last minute, in W,

PF is the unit-less preference factor,

KTT is the fraction of temperature added during the time period that will still be present at the target time.

From this the demand for each minute is calculated as: demand for minute = (demand factor * preference factor for the minute). In the preferred embodiment, the preference factor is inversely correlated to the predicted output of the solar PV inverter.

To keep the space heating plan within the constraints of the heat pump capacity, the controller 'caps' the planned demand at a maximum preferred demand per minute with the excess demand being split equally over all previous minutes without exceeding the maximum preferred demand for any minute. Any excess demand remaining can be added to the minutes after the tested minute as soon as possible, while not exceeding the maximum preferred demand per minute for any minute. The cap can be varied to improve the balance of heat output between the space heating and hot water circuits.

Most heating systems, including inverter heat pumps, have a minimum heat output when turned on. For this reason, a minimum demand (equal to minimum output) is considered for every minute. The minutes are looped through in order, and when the demand for any minute is less than the minimum demand, the demand for the minute is set to zero. The demand that existed is spread over the previous minutes if that would mean leaving the heating system on, or over the next minutes if the heating system was not on.

The use of preference/cost factors and minimum and maximum comfortable temperature profiles, instead of set-point profiles, allows the heating to be applied most efficiently within the comfortable indoor air temperature range. So where the use of a set-point profile would force a specific path to be followed, this method allows the optimum path to be determined based on current conditions. One effect of the approach of the present invention is that when PV generation is used in calculating the preference factor, the house will often be heated when unoccupied because the most cost-effective solution is to heat the house during the daytime when PV output is greatest. Conversely, this allows the house to cool when the occupants have returned to the house as for example from work. This strategy has an additional benefit in that when the predicted demand turns out to be less than the actual demand, the cost of compensating for the error in prediction is significantly lower. When PV generation is expected to be low, for example in winter, a different path which is more efficient will automatically be followed due to the reduced preference for daytime demand when predicted PV output is lower.

Hot water demands can be planned for the next 24 hours. For working people or people otherwise generally not home during business hours, hot water use will generally be greater in the morning and evening. So a basic embodiment of the hot water planning is simply to determine a minimum required hot water level in the morning for when the occupants get up and a minimum required hot water level in the evening for when the occupants return to the house such as for example from work. By considering the losses and current temperatures in the heat storage, which is preferably a hot water tank, the constant power that would be required to meet these two demand levels can be calculated.

Demand levels are calculated by the controller based on the difference between the current and target storage levels, which are calculated from temperature measurements of the hot water tank coupled with knowledge of the tank capacity and loss rate.

When the system is required to pasteurise water stored in the tank, the controller sets a hot water level target in the afternoon which is sufficient to meet the pasteurisation requirement, e.g. an average tank temperature of 65°C. The afternoon target is chosen for pasteurisation in order to maximise the use of PV electricity and absorbed solar heat during the day to reduce the cost of pasteurisation. When pasteurisation is not required, the afternoon target is determined by the predicted hot water demand and cost profiles over the next 24 hours in a similar fashion to the space heating plan. The timing of the afternoon target is preferably set to occur after the majority of the predicted daily PV electricity has been generated and before the occupants return home; for example, 4pm.

The time that can be taken as a morning target should be a time before a morning shower or other heavy hot water use, and can be indirectly set from the user-interface 54 which requests users to define their 'getting-up times'.

As the measured hot water storage level, as calculated by sensors 46, 47, 48 and 49, is falling, the calculated hot water demand rises. If either a) the hot water demand exceeds a maximum capacity of the heat pump to reach the next target temperature, or b) the storage level falls below an acceptable minimum, the controller enters a "boost mode" which uses the electric immersion heater 44 to supply heat to the tank instead of the heat pump. The use of the immersion heater 44 can be minimised by predicting the heat pump output capacity.

The heat pump is required to meet both the space heating and hot water demands. Plans for the space heating demands and hot water demands are constructed as explained above. Heat pump performance (COP) is generally maximised by heating the space heating and hot water circuits simultaneously. However, the ability of the heat pump to match or exceed each of the space heating and hot water demands is limited by many factors. These factors include for example: the return temperature and flow rate of the load circuits and the source fluid, the output or transfer capacities of the compressor, condenser and desuperheater, the freezing point of the source fluid, the condensing temperature limit, and the measured compressor discharge temperature and its safe limits. Certain factors are fixed and can be programmed into the controller, while other factors must be predicted. A performance model of the dual temperature heat pump is built into the controller to enable accurate predictions of the heat pump limitations such that the controller can anticipate when demands will be difficult to meet. For example, the controller will avoid operation at conditions where the maximum refrigerant condensing temperature or the minimum coolant flow temperatures are likely to be exceeded. Where the controller is required to meet space heating and hot water demands simultaneously, one of the plans could be prioritised whilst the other plan is only loosely followed. The space heating plan tries to keep the house temperature between a minimum comfortable temperature and a maximum comfortable temperature. These temperatures are likely to be quite close to each other and will vary throughout the day, so the space heating plan can only be allowed to vary a small amount before re-planning will become necessary. The hot water plan, however, has a large difference between minimum and maximum acceptable tank temperatures and the maximum acceptable tank temperature is unlikely to ever be reached, so the hot water plan can be followed more loosely if required. If the hot water plan is just calculated as a constant demand until the target time, the demand level required to activate the minor circuit in the heat pump can be varied based on the current space heating demand. So when space heating is demanded, a lower hot water demand can be used to activate the minor circuit in the heat pump than when there is no space heating demand. When providing both space heating and hot water, the compressor speed can be set to try to match the total heat output to the total heat demand. This can cause too much hot water to be delivered and too little space heating to be delivered, which would be undesirable when trying to match the space heating demand to the plan. Therefore, in this case it is preferable to set the compressor speed such that the space heating demand matches the space heating output, which will cause the hot water output to be significantly greater than the hot water demand. When the hot water plan is only loosely followed, this is an acceptable strategy because the hot water demand will reduce very gradually as it approaches its target time.

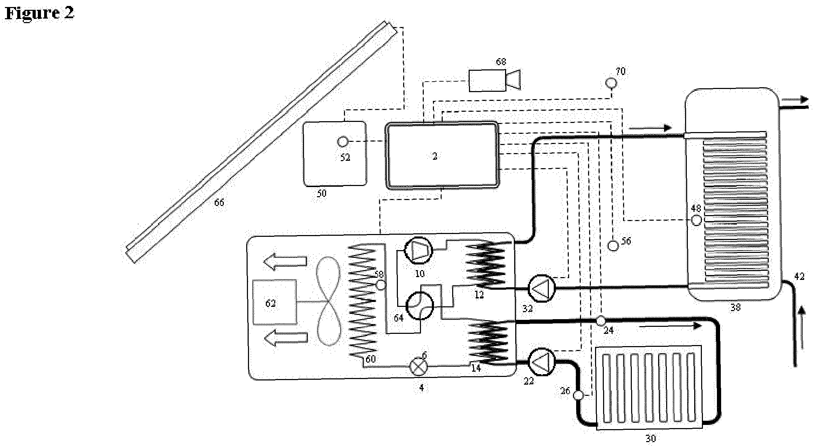

Figures 2-4 depict variations on the first embodiment. Accordingly, like components are identified with like reference numerals in Figures 2-4 as in Figure 1.

Second Embodiment

In a second embodiment of the invention, Figure 2, the heat pump 4 includes a motorized electric fan 62 which is arranged to propel air through a finned-coil evaporator 60 in the manner of an "air-source heat pump". In this embodiment the outdoor air temperature sensor is preferably mounted at the intake vent to the evaporator. The refrigeration cycle also contains a 4-way reversing valve 64 which is arranged in the configuration illustrated in EP0134015B1 (1984) and permits the source and major heat load circuits to be reversed such that heat can be extracted from the 'load' and rejected to the 'source' whilst the high temperature discharge heat of the refrigerant is still available to the minor circuit. This design of heat pump enables the major circuit to perform either heating or cooling functions, thus expanding the ability of the controller to minimise user discomfort. Furthermore, the combined operation of cooling the major circuit and heating the minor circuit yields a higher performance than an independent cooling circuit.

The controller monitors the AC power output of the solar photovoltaic inverter 50 which is connected to a local array of solar photovoltaic modules 66. The measured AC power is connected to the mains bus bar of the building such that the heat pump will always draw power from the inverter when it is available.

A combination of occupancy sensors such as infrared cameras 68 and additional secondary indoor temperature sensors 70 are used to gather indications of discomfort without the need for a user-interface. Such indications may include variations in temperature between rooms due to use of thermostatic radiator valves and increased radiant heat loss from occupants' bodies which may indicate that they are feeling too hot. The initial maximum and minimum indoor temperature comfort profiles are calculated from universal comfortable temperature profiles rather than user-defined preferences.

Additional sensors may be combined with the user-interface of the first embodiment to enable the controller to match user comfort and hot water requirements more closely so the users are less likely to indicate discomfort and the performance will suffer fewer reactionary responses to demand which are generally inefficient.

Heat demands are regulated with a relative function. When hot water demand exceeds a minimum threshold, the space heating output is limited to a fixed function of the hot water output, for example: space heating output $\leq 2 *$ hot water output.

To refine daily hot water target times and target levels, the controller compares the user-defined times against historical measurements of changes in hot water level as part of the cost-minimising function. For example, heating a hot water tank in an evening may be more efficient than in the early morning due to higher source temperatures, even after compensation for additional heat losses from the tank.

The timing of pasteurisation is preferably regulated through analysis of hot water usage over many weeks to minimise daily net marginal cost.

To combine the space heating and hot water plans, an iterative process can be used. First, the space heating plan can be defined independently of the hot water plan. Next, the hot water plan can be developed based on use of the space heating plan - this would mean that rather than having a fixed demand for hot water at all points in the plan, the demand would be spread out differently depending on how much space heating is required at any particular time. As far as possible, the controller sets the hot water demand at a level such that space heating and hot water demands can be met simultaneously. If a space heating plan is then developed based on use of the hot water plan, it is likely that it would be slightly different to the original space heating plan, as reducing the total heat pump demand at high demand points of time is likely to allow the compressor to run at a slower speed and probably more efficiently. Developing a hot water plan based on this new space heating plan will probably improve the hot water plan slightly. Repeatedly improving the space heating and hot water plans in this way will produce an efficient combined plan which exploits the greatest benefits of the dual temperature heat pump and the varying cost of electricity.

The net cost of heat is calculated by assigning a time-varying cost function to local and grid-level electricity supplies and a performance function to the heating demand. The performance function also uses predicted profiles of outdoor and indoor air temperature, source temperature and hot water storage temperatures, together with stored values for the heat emitting capacity of the space heating circuit, to refine the source and load temperature profiles and determine the performance profile over the time period. Combining the heat demands, performance profiles, and net cost functions, an overall cost profile can be predicted. The cost profile is then used to apportion heat demand throughout the time period of the space heating and hot water plans.

Third Embodiment

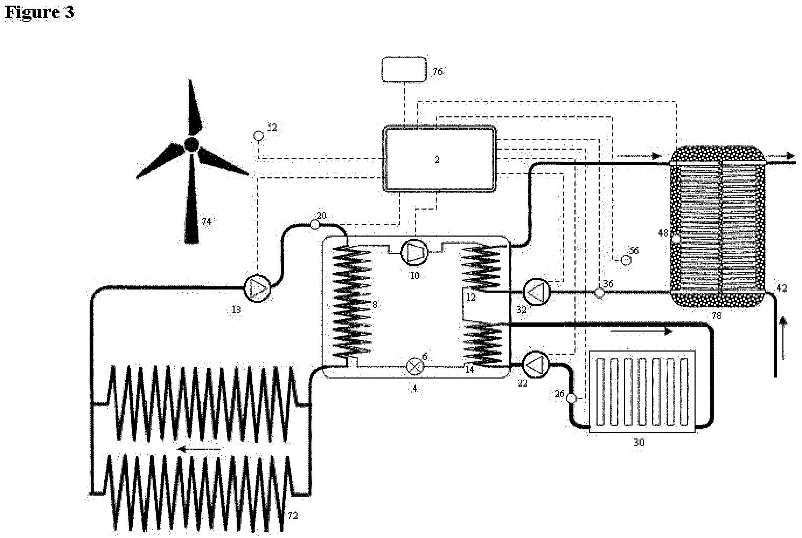

In a third embodiment of the invention, Figure 3, heat collectors, which may be plastic pipes that form a ground source heat exchange loop 72, are mounted in the ground in the manner of a "ground-source heat pump" system, and a circulating pump 18 transports heated coolant from the heat collectors to the heat pump evaporator 8. Ground source collectors provide a more stable temperature over daily and seasonal periods compared to air and solar-source collectors which assist the ability of the controller to predict the net cost of heat and devise more optimised heating plans. The disadvantages of ground source collectors are the high installation and maintenance costs compared to other heat sources and the relatively low source temperatures which are available during the summer.

The controller monitors the AC power output of a wind turbine generator 74 with a current transformer used as the electric generator power output sensor 52. The measured AC power is connected to the mains bus bar of the building such that the heat pump will always draw power from the inverter when it is available. The preference factor used in the demand profile calculation is inversely correlated to the measured output of the wind turbine generator.

The controller receives data regarding the live and forecast outdoor air temperature from a digital connection to an internet server 76. This arrangement avoids the need for a dedicated outdoor sensor which saves on installation and component cost.

The minor circuit may include a heat exchanger within a heat storage vessel containing a phase change material 78 such as paraffin. Heat may be recovered from the paraffin using a fluid circulating through a secondary heat exchanger within the paraffin for hot water, space heating or other applications.

Fourth Embodiment

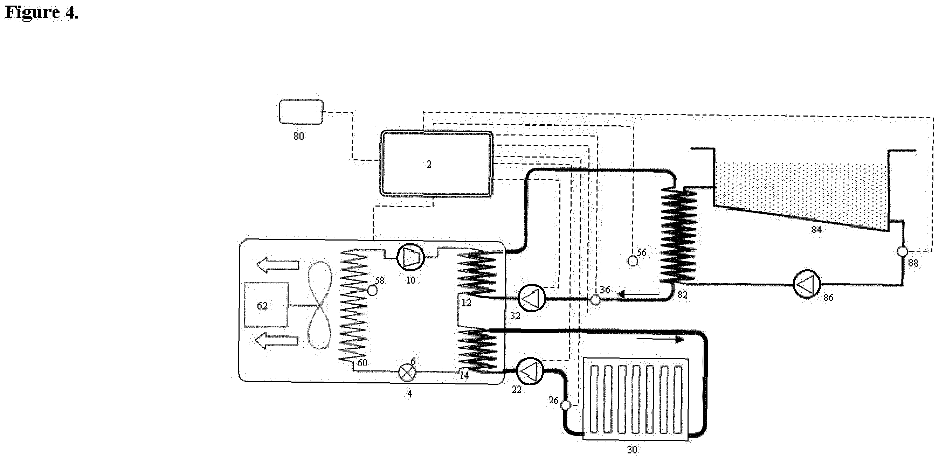

In Figure 4, a fourth embodiment of the invention, the controller monitors the marginal cost of electricity directly via connection to a smart meter 80. The preference factor, used by the controller for calculating an optimum heat demand plan, is inversely correlated to the marginal cost measured by the smart meter.

The minor circuit includes a minor circuit heat exchanger with spa circuit 82, which is cooled by a pool-heating circuit. The pool-heating circuit contains an open heated water vessel 84 such as a spa or 'hot tub', a spa fluid circulation pump 86 and a spa return temperature sensor 88.

The finned-coil evaporator 60 is mounted inside the building and is heated by a combination of outdoor air and indoor air recovered from the building and propelled over the surfaces of the evaporator by the fan 62 in the manner of an "exhaust air heat pump". Exhaust air heat pump systems minimise heat losses due to ventilation which reduces annual heating demands for a given hot water storage requirement. With the present invention, the higher fraction of heat storage relative to annual heat demand assists the ability of the controller to minimise net costs through a forecasting plan that can modify both heat load and heat demand.

Although the invention has been shown and described with respect to a certain embodiment or embodiments, equivalent alterations and modifications may occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein exemplary embodiment or embodiments of the invention. In addition, while a particular feature of the invention may have been described above with respect to only one or more of several embodiments, such feature may be combined with one or more other features of the other embodiments, as may be desired and advantageous for any given or particular application.

An aspect of the invention, therefore, is a heating system. In exemplary embodiments, the heating system includes a heat pump; two heat output circuits in fluid communication with the heat pump for the flow of a refrigerant, the two heat output circuits comprising a major fluid circuit and a minor fluid circuit for performing different heating operations; a power source having a variable cost; and a controller configured to control the heat pump and regulate flow of the major and minor fluid circuits to perform the heating operations. The controller is configured to determine a variable cost of electricity of the power source, and distribute flow as between the major and minor fluid circuits to perform the heating operations to minimize the electricity cost. The heating system may include one or more of the following features, either individually or in combination.

In an exemplary embodiment of the heating system, the controller is configured to maximize a fraction of daily time that is assigned to heating by the major fluid circuit such that average heat demand and changes of operating mode are minimized.

In an exemplary embodiment of the heating system, the controller is configured to maximize a fraction of daily heat that is delivered to the major and minor fluid circuits during defined periods within a day.

In an exemplary embodiment of the heating system, the power source comprises a photovoltaic thermal array that acts as a heat source to heat the refrigerant.

In an exemplary embodiment of the heating system: the heat pump comprises an expansion device that expands the refrigerant, an evaporator for evaporating the refrigerant by the absorption of heat, an electric motor compressor for compressing the heated refrigerant, a desuperheater, and a condenser; the major fluid circuit supplies cooling fluid for cooling the condenser; and the minor fluid circuit supplies cooling fluid for cooling the desuperheater in contraflow heat exchange to the refrigerant.

In an exemplary embodiment of the heating system: the major fluid circuit is configured to perform space heating of a heated space, and the minor fluid circuit is configured to perform a secondary heating operation; and the controller is configured to maximize a fraction of daily time that is assigned to space heating by the major fluid circuit such that average heat demand and changes of operating mode between space heating and the secondary heating operation are minimized.

In an exemplary embodiment of the heating system, the minor fluid circuit includes a heat exchange coil within a hot water tank, and the secondary heating operation includes heating water in the hot water tank.

In an exemplary embodiment of the heating system, the heating system further includes a pre-heating thermal store arranged to pre-heat water before entering the hot water tank.

In an exemplary embodiment of the heating system, the heating system further includes a boost heater for supplementing heat output of the heat pump to the major fluid circuit for space heating.

In an exemplary embodiment of the heating system, the major fluid circuit comprises a major load circuit pump, a major load circuit flow temperature sensor, a major load circuit return temperature sensor, and one or more major load circuit heat emitters for emitting heat for space heating.

In an exemplary embodiment of the heating system, the minor fluid circuit comprises a minor load circuit pump, a minor load circuit flow temperature sensor, and a minor load circuit return temperature sensor.

In an exemplary embodiment of the heating system, the heating system further includes a source fluid circuit in thermal communication with the power source for providing a source flow of refrigerant to the evaporator.

In an exemplary embodiment of the heating system, the source fluid circuit further comprises a source fluid circulation pump for pumping the source flow of refrigerant to the evaporator, and a source circuit return temperature sensor measuring a temperature of the source fluid entering the evaporator.

In an exemplary embodiment of the heating system, the heating system further includes a user interface configured to receive user inputs from a user, wherein the user inputs include an indication of discomfort based on temperature within the heated space. The controller is configured to create a profile for a minimum comfortable temperature level and a maximum comfortable temperature level based on the user inputs, and the controller controls the heat pump to perform the heating operations in accordance with the profiles for the minimum and maximum comfortable temperature levels.

In an exemplary embodiment of the heating system, the profiles for the minimum and maximum comfortable temperature levels respectively comprise a minimum temperature level and a maximum temperature level set for specified time intervals.

In an exemplary embodiment of the heating system, the user interface is configured to receive settings from a user that define user temperature preferences based on time, and the controller is configured to generate the profiles for the minimum and maximum comfortable temperature levels based on the user temperature preferences.

In an exemplary embodiment of the heating system, the user interface is configured to receive a user input including an indication of current discomfort based on temperature, and the controller is configured to control the heat pump to perform the heating operations in response to the indication of current discomfort.

In an exemplary embodiment of the heating system, the heating system further includes an outdoor temperature sensor for measuring an outdoor air temperature, and an indoor temperature sensor for measuring an indoor air temperature of the heated space, and the controller controls the heat pump to perform the heating operations further based on the outdoor and indoor temperatures.

In an exemplary embodiment of the heating system, the controller is configured to receive information regarding electricity cost of the system, and the controller controls the heat pump to perform the heating operations further based on the electricity cost information.

In an exemplary embodiment of the heating system, the controller is configured to: predict an outdoor temperature profile based on outdoor temperature information measured by the outdoor temperature sensor or internet weather data; predict passive thermal gains of the heated spaced based on indoor temperature information measured by the indoor temperature sensor; predict a marginal cost of electricity of the system based on the received electricity cost information; predict user demand based on the user inputs to the user interface; generate an optimized heat demand plan in accordance with the predictions, the plan being optimized for maintaining the temperature of the heated space within a comfortable temperature in accordance with the profiles for the minimum and maximum comfortable temperature levels while minimizing electricity cost; and control the heat pump to perform the heating operations in accordance with the optimized heat demand plan.

## INDUSTRIAL APPLICABILITY

This invention may find applications in the fields of domestic, commercial and industrial building management systems. Specifically the invention is aimed at domestic building heating systems where both space heating and sanitary hot water supplies are required. However it could also be applied in larger buildings where two heating circuits, termed "major and minor" in this invention, are commonly installed. Examples may include hotels, gyms, factories, and leisure centres, where, for instance, the major load is a swimming pool and the minor load is a spa pool.

## Claims

1. A heating system comprising:

    a heat pump;
    two heat output circuits in fluid communication with the heat pump for the flow of a refrigerant, the two heat output circuits comprising a major fluid circuit and a minor fluid circuit for performing different heating operations;
    a power source having a variable cost; and
    a controller configured to control the heat pump and regulate flow of the major and minor fluid circuits to perform the heating operations;
    wherein the controller is configured to:

    determine a variable cost of electricity of the power source; and
    distribute flow as between the major and minor fluid circuits to perform the heating operations to minimize the electricity cost.

2. The heating system of any of claim 1, wherein the controller is configured to maximize a fraction of daily time that is assigned to heating by the major fluid circuit such that average heat demand and changes of operating mode are minimized, or wherein the controller is configured to maximize a fraction of daily heat that is delivered to the major and minor fluid circuits during defined periods within a day.

3. The heating system of any of claims 1-2, wherein the power source comprises a photovoltaic thermal array that acts as a heat source to heat the refrigerant;
and/or wherein:

the heat pump comprises an expansion device that expands the refrigerant, an evaporator for evaporating the refrigerant by the absorption of heat, an electric motor compressor for compressing the heated refrigerant, a desuperheater, and a condenser;
the major fluid circuit supplies cooling fluid for cooling the condenser; and
the minor fluid circuit supplies cooling fluid for cooling the desuperheater in contraflow heat exchange to the refrigerant.

4. The heating system of any of claims 1-3, wherein:

the major fluid circuit is configured to perform space heating of a heated space, and the minor fluid circuit is configured to perform a secondary heating operation; and
the controller is configured to maximize a fraction of daily time that is assigned to space heating by the major fluid circuit such that average heat demand and changes of operating mode between space heating and the secondary heating operation are minimized.

5. The heating system of claim 4, wherein the minor fluid circuit includes a heat exchange coil within a hot water tank, and the secondary heating operation includes heating water in the hot water tank;
and optionally further comprising a pre-heating thermal store arranged to pre-heat water before entering the hot water tank.

6. The heating system of any of claims 4-5, further comprising a boost heater for supplementing heat output of the heat pump to the major fluid circuit for space heating.

7. The heating system of any of claims 1-6, wherein the major fluid circuit comprises a major load circuit pump, a major load circuit flow temperature sensor, a major load circuit return temperature sensor, and one or more major load circuit heat emitters for emitting heat for space heating;
and/or wherein the minor fluid circuit comprises a minor load circuit pump, a minor load circuit flow temperature sensor, and a minor load circuit return temperature sensor.

8. The heating system of any of claims 1-7, further comprising a source fluid circuit in thermal communication with the power source for providing a source flow of refrigerant to the evaporator.

9. The heating system of claim 8, wherein the source fluid circuit further comprises a source fluid circulation pump for pumping the source flow of refrigerant to the evaporator, and a source circuit return temperature sensor measuring a temperature of the source fluid entering the evaporator.

10. The heating system of any of claims 1-9, further comprising a user interface configured to receive user inputs from a user, wherein the user inputs include an indication of discomfort based on temperature within the heated space;
wherein the controller is configured to create a profile for a minimum comfortable temperature level and a maximum comfortable temperature level based on the user inputs, and the controller controls the heat pump to perform the heating operations in accordance with the profiles for the minimum and maximum comfortable temperature levels.

11. The heating system of claim 10, wherein the profiles for the minimum and maximum comfortable temperature levels respectively comprise a minimum temperature level and a maximum temperature level set for specified time intervals;
and/or wherein the user interface is configured to receive settings from a user that define user temperature preferences based on time, and the controller is configured to generate the profiles for the minimum and maximum comfortable temperature levels based on the user temperature preferences.

12. The heating system of any of claims 10-11, wherein the user interface is configured to receive a user input including an indication of current discomfort based on temperature, and the controller is configured to control the heat pump to perform the heating operations in response to the indication of current discomfort.

13. The heating system of any of claims 1-12, further comprising an outdoor temperature sensor for measuring an outdoor air temperature, and an indoor temperature sensor for measuring an indoor air temperature of the heated space, and wherein the controller controls the heat pump to perform the heating operations further based on the outdoor and indoor temperatures.

14. The heating system of claim 13, wherein the controller is configured to receive information regarding electricity cost of the system, and the controller controls the heat pump to perform the heating operations further based on the electricity cost information.

15. The heating system of claim 14, wherein the controller is configured to:

predict an outdoor temperature profile based on outdoor temperature information measured by the outdoor temperature sensor or internet weather data;
predict passive thermal gains of the heated spaced based on indoor temperature information measured by the indoor temperature sensor;
predict a marginal cost of electricity of the system based on the received electricity cost information;
predict user demand based on the user inputs to the user interface;
generate an optimized heat demand plan in accordance with the predictions, the plan being optimized for maintaining the temperature of the heated space within a comfortable temperature in accordance with the profiles for the minimum and maximum comfortable temperature levels while minimizing electricity cost; and
control the heat pump to perform the heating operations in accordance with the optimized heat demand plan.

Figure 1

**Figure 2**

Figure 3

Figure 4.

**Figure 5**

Single temperature, fixed speed heat pump

- Power consumption or generation
- Output of the power generation device
- Net consumption from power grid
- Time of day

Single temperature, variable speed heat pump

- Limit of power consumption for minor circuit
- Limit of power consumption for major circuit

Dual temperature, fixed speed heat pump

Dual temperature, variable speed heat pump

Legend:
- Excess low-cost power generation
- Heat pump consumption for major circuit
- Heat pump consumption for minor circuit

Note: Power consumption for the minor circuit when operating with a dual temperature or fixed speed heat pump declines as the temperature of the heat storage facility rises whereas the power consumption for the major circuit remains stable due to constant fluid return temperatures.

**Figure 6**

```
┌─────────────────────────────┐
│         Read sensors        │
└─────────────────────────────┘
              ↓
┌───────────────────────────────────────────────────────────────┐
│ Use a target time of 24 hours, with no active heating of the house │
└───────────────────────────────────────────────────────────────┘
              ↓
┌─────────────────────────────┐
│      Set check time to now  │←──────────────────┐
└─────────────────────────────┘                   │
              ↓                                    │
┌───────────────────────────────────────────────┐ │
│ Predict house temperature for this minute by   │ │
│ adding or subtracting the predicted gains and  │←│
│ losses between this check and the previous     │ │
│ check                                          │ │
└───────────────────────────────────────────────┘ │
              ↓                                    │
┌───────────────────────────────────────────────┐ │
│ If predicted house temperature is above the    │ │
│ maximum comfortable temperature stop adding    │ │
│ heat and store minute in which this occurred   │ │
└───────────────────────────────────────────────┘ │
              ↓                                    │
┌───────────────────────────────────────────────┐ │
│ If predicted house temperature is below the    │ │
│ minimum comfortable temperature calculate how  │ │
│ far below it is and store minute if it is the  │ │
│ most below in this check                       │ │
└───────────────────────────────────────────────┘ │
              ↓                                    │
┌─────────────────────────────┐                   │
│  Add one minute to check time│                  │
└─────────────────────────────┘                   │
              ↓                                    │
           ◇ Check time <= target time ───────────┘
           ◇
 Check time > target time ↓
┌───────────────────────────────────────────────┐
│ Compare the last time that the maximum         │
│ comfortable temperature is exceeded with the   │
│ time that the minimum comfortable temperature  │
│ is exceeded by the largest amount              │
└───────────────────────────────────────────────┘
```

Maximum exceeded earlier than minimum exceeded     Minimum exceeded earlier than maximum exceeded

Neither minimum ↓ maximum or exceeded

┌─────────────────────────────┐
│ Apply heating demands as per │
│ the tested heating schedule  │
└─────────────────────────────┘

┌───────────────────────────────┐   ┌───────────────────────────────┐
│ Set target time to the last   │   │ Set target time to the time   │
│ time that the maximum         │   │ that the minimum comfortable  │
│ comfortable temperature is    │   │ temperature is exceeded by    │
│ exceeded and require          │   │ the largest amount and        │
│ temperature at that time to   │   │ require temperature at that   │
│ be maximum comfortable        │   │ time to be minimum            │
│ temperature                   │   │ comfortable temperature       │
└───────────────────────────────┘   └───────────────────────────────┘

┌───────────────────────────────────────────────────────────────┐
│ Calculate optimum heating schedule for new target time and temperature │
└───────────────────────────────────────────────────────────────┘

Europäisches
Patentamt

European
Patent Office

Office européen
des brevets

# EUROPEAN SEARCH REPORT

Application Number

EP 17 15 2853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 660 942 A1 (PANASONIC CORP [JP]) 6 November 2013 (2013-11-06) | 1-7,14 | INV. F24D19/10 |
| Y | * page 2, paragraph 1 - page 15, paragraph 131; figures 2-6 * | 10-13,15 | G05D23/19 F25B6/04 F25B40/04 |
| Y | US 2013/284818 A1 (HAYASHIDA GAKU [JP] ET AL) 31 October 2013 (2013-10-31) * page 2, paragraph 40 - page 11, paragraph 164; figures 2-3 * | 10-13,15 | |
| X | WO 2012/020955 A2 (NAT UNIV HANBAT INDUSTRY [KR]; SAMYOUNG CO LTD [KR]; CHOI JONG MIN [KR]) 16 February 2012 (2012-02-16) * page 2, paragraph 8 - page 12, paragraph 87; figure 2 * | 1,5,8,9 | |

TECHNICAL FIELDS
SEARCHED (IPC)

F24D
G05D
F25B

The present search report has been drawn up for all claims

| Place of search | Date of completion of the search | Examiner |
|---|---|---|
| Munich | 12 June 2017 | Hoffmann, Stéphanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 2853

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2017

| Patent document cited in search report | | | Publication date | Patent family member(s) | | | Publication date |
|---|---|---|---|---|---|---|---|
| EP 2660942 | A1 | | 06-11-2013 | CN | 102687364 | A | 19-09-2012 |
| | | | | EP | 2660942 | A1 | 06-11-2013 |
| | | | | JP | 5025835 | B2 | 12-09-2012 |
| | | | | US | 2012235478 | A1 | 20-09-2012 |
| | | | | WO | 2012090365 | A1 | 05-07-2012 |
| US 2013284818 | A1 | | 31-10-2013 | CN | 103069221 | A | 24-04-2013 |
| | | | | EP | 2749820 | A1 | 02-07-2014 |
| | | | | JP | 5958912 | B2 | 02-08-2016 |
| | | | | JP | WO2013027312 | A1 | 05-03-2015 |
| | | | | US | 2013284818 | A1 | 31-10-2013 |
| | | | | WO | 2013027312 | A1 | 28-02-2013 |
| WO 2012020955 | A2 | | 16-02-2012 | KR | 20120014445 | A | 17-02-2012 |
| | | | | WO | 2012020955 | A2 | 16-02-2012 |

EPO FORM P0459

For more details about this annex : see Official Journal of the European Patent Office, No. 12/82

**EP 3 196 558 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8972073 B2, Hayashida
- US 5081846 A, Dudley
- US 20040262410 A1, Hull
- US 20060192021 A1, Schultz
- US 20110257795 A1, Narayanamurthy
- US 20140358291 A1, Wells
- GB 2508238 A, Ruff
- US 20140316584 A1, Matsuoka
- US 20140277761 A1, Matsuoka
- EP 0134015 B1, Yasuda
- EP 0134015B1 A